(19) Europäisches Patentamt
European Patent Office
Office européen des brevets

(11) Veröffentlichungsnummer: **0 455 027 A2**

## (12) EUROPÄISCHE PATENTANMELDUNG

(21) Anmeldenummer: 91105916.0

(22) Anmeldetag: 13.04.91

(51) Int. Cl.⁵: **C08L 81/02**, //(C08L81/02, 61:18)

(30) Priorität: 28.04.90 DE 4013709

(43) Veröffentlichungstag der Anmeldung:
06.11.91 Patentblatt 91/45

(84) Benannte Vertragsstaaten:
**BE DE FR GB IT**

(71) Anmelder: **BAYER AG**

**W-5090 Leverkusen 1 Bayerwerk(DE)**

(72) Erfinder: **Köhler, Burkhard, Dr.**
**Muendelheimer Strasse 94**
**W-4150 Krefeld 11(DE)**
Erfinder: **Reinking, Klaus, Dr.**
**Robert-Stolz-Strasse 16b**
**W-5652 Wermelskirchen(DE)**
Erfinder: **Dorf, Sabine, Dr.**
**Bodelschwinghstrasse 16**
**W-4150 Krefeld 1(DE)**
Erfinder: **Dhein, Rolf, Dr.**
**Deswatinesstrasse 30**
**W-4150 Krefeld(DE)**

(54) **Leichtfliessende Polyarylensulfid-Formmassen enthaltend Xylol-Formaldehyd-Harze.**

(57) Die Erfindung betrifft neue leichtfließende Formmassen aus Polyarylensulfiden (PAS), vorzugsweise Polyphenylensulfiden (PPS) enthaltend speziellen Xylol-Formaldehydharze.

EP 0 455 027 A2

Die Erfindung betrifft neue leichtfließende Formmassen aus Polyarylensulfiden (PAS), vorzugsweise Polyphenylensulfiden (PPS) enthaltend speziellen Xylol-Formaldehydharze.

Arylsulfidpolymere werden als inerte, hochtemperaturbeständige Thermoplaste, die zudem einen hohen Füllgrad mit Glasfasern und/oder anderen Materialien erlauben, zunehmend für die Elektroindustrie und andere Industriebereiche interessant. Sie sind bekannt (z.B. US-A 3 354 129, EP-A 171 021) und handelsüblich, z.B. Ryton®, Tedur®.

Der Einsatz dieser Polymeren, insbesondere des Polyparaphenylensulfids, nimmt vor allem in Bereichen, die bislang Duroplasten vorbehalten waren, wegen der einfacheren Verarbeitbarkeit zu.

Bei der Herstellung dünnwandiger Formteile können Schwierigkeiten auftreten, wenn die Fließwege der Schmelzen im Werkzeug sehr lang sind. Dies ist insbesondere dann der Fall, wenn aus Gründen der Verzugsfreiheit die Anschnitte so gelegt sind, daß z.B. bei Mischungen mit Glasfasern eine Vorzugsorientierung der Glasfasern resultiert.

Bei der Herstellung derartiger Formteile kann es schwierig sein, die Formen trotz der niedrigen Viskosität der Schmelzen vollständig zu füllen. Ein Grund dafür kann sein, daß PAS-Schmelzen beim Abkühlen außerordentlich rasch erstarren können. Dieses Verhalten kann durch die hohe Kristallisationsgeschwindigkeit von PAS bewirkt werden. Bei langen Fließwegen der Schmelzen können diese bereits während des Formfüllvorgangs soweit abkühlen, daß dann schon die Erstarrung unter Zunahme der Viskosität der Schmelzen einsetzt. Die Folge ist, daß die vollständige Füllung der Form erschwert wird.

Allgemein weisen Formteile, bei deren Herstellung der Erstarrungsprozeß der Schmelze einsetzt bevor die Form vollständig gefüllt ist, verringerte mechanische Festigkeit und, bei verstärkten oder gefüllten Formmassen, Oberflächenstörungen in Angußferne, auf.

Die Konsequenz daraus ist, daß es zur vollständigen Füllung der Formwerkzeuge notwendig ist, diese sehr rasch zu füllen. In vielen Fällen ist dies nur bei hinreichend niedrigen Schmelzviskositäten der Polymeren möglich.

Im Sinne der Verarbeitbarkeit von gegebenenfalls faserverstärkten oder mineralgefüllten Polyarylensulfidmassen wäre es daher von Vorteil, die Schmelzviskosität deutlich zu senken.

Es wurde nun gefunden, daß durch Zusatz von Xylol-Formaldeyhdharzen die Schmelzviskosität von Polyarylensulfiden, vorzugsweise Polyphenylensulfid, und deren Abmischung mit Glasfasern und gegebenenfalls mit anderen üblichen Verstärkungs-und Füllstoffen stark verringert werden kann.

Gegenstand der Erfindung sind daher Mischungen aus

    a) 70 - 99,8, bevorzugt 85 - 99 Gew.-%, eines Polyarylensulfids, vorzugsweise eines Polyphenylensulfids, besonders bevorzugt von Polyparaphenylensulfid mit einer Schmelzviskosität von 5 - 500 Pas (gemessen bei 306° C und einer Schubspannung von 1000 Pa) und

    b) 0,02 - 30, bevorzugt 1 - 15 Gew.-% von Xylol-Formaldehydharzen

und bezogen auf die Summe (a + b) 0-400 Gew.-% Zusatzstoffen.

Die erfindungsgemäßen Mischungen können Verstärkungs-, Zusatz- und Füllstoffe organische Additive, z.B. Bismaleinimide von Diaminen wie Bismaleinimidodiphenylmethan, enthalten.

Als Verstärkungs- Füllstoffe können organische und anorganische Stoffe eingeset werden, z.B. Pigmente, Talcum, Glimmer, Fasern wie Glasfasern, Kohlefasern, Aramidfasern, Glaskugeln, Metalle, Metalloxide, Carbonate wie Calciumcarbonat, Magnesiumcarbonate, Dolomit, Quarz, Entformungshilfsmittel (z.B. E-Wachs) usw.

Die erfindungsgemäßen Mischungen werden dadurch hergestellt, daß 70-99,8, vorzugsweise 85-99 Gew.% festes oder geschmolzenes Polyarylensulfid, bevorzugt Polyphenylensulfid, mit einer Schmelzviskosität von 5 bis 500 Pas mit 0,2-30, vorzugsweise 1-15 Gew.% der Xylol-Formaldehydharze abgemischt werden und in der Schmelze bei Temperaturen von 180 bis 350° C homogenisiert werden.

Die erfindungsgemäß verwendbaren Xylol-Formaldehydharze sind handelsüblich (z.B. Kunstharz XF® der Fa. Bayer AG).

Sie werden durch Kondensation von Xylolen mit Formaldehyd oder Formaldehydderivaten hergestellt.

Für die Herstellung der erfindungsgemäßen Mischungen eignen sich bekannte Schmelzmischaggregate, z.B. Kneter, (Doppel)-Schneckenwellenextruder u.s.w.

Die erfindungsgemäßen Mischungen können zur Herstellung geformter Körper wie Formteile, bevorzugt dünnwandige Formteile, oder als Umhüllungsmaterialien für elektronische Bauteile u.s.w. verwendet werden.

Formteile aus den erfindungsgemäßen Mischungen zeichnen sich durch eine gute Oberfläche und helle Eigenfarbe aus.

Beispiele

Vergleichsbeispiel

Man mischt 40 Gew.-% Glasfasern (CS 7916® der Fa. Bayer) und 60 Gew.-% PPS der Schmelzviskosität 40 Pas (gemessen bei 310° C, 1000 s⁻¹). Die Viskosität des Compounds beträgt 186,8 Pas

bei 1000 s$^{-1}$, 159,4 Pas bei 1500 s$^{-1}$.

Beispiel 1

Man mischt 40 Gw.-% Glasfasern, 59 Gew.-% PPS und 1 Gew.-% Kunstharz XF$^R$. Die Viskosität des Compounds beträgt 165,4 Pas bei 1000 s$^{-1}$, 143,9 Pas bei 1500 s$^{-1}$.

Beispiel 2

Man mischt 40 Gew.% Glasfasern, 55 Gew.% PPS und 5 Gew.-% Kunstharz XF$^R$. Die Viskosität des Compounds beträgt 89,6 Pas bei 1000 s$^{-1}$, 80,6 Pas bei 1500 s$^{-1}$.

**Patentansprüche**

1. Formmassen aus
   a) 70 - 99,8 eines Polyarylensulfids mit einer Schmelzviskosität von 5 - 500 Pas (gemessen bei 306°C und einer Schubspannung von 1000 Pa) und
   b) 0,02 - 30 von Xylol-Formaldehydharzen und

   bezogen auf die Summe (a + b) 0-400 Gew.-% Zusatzstoffen.

2. Verfahren zur Herstellung der Formmassen des Anspruchs 1, dadurch gekennzeichnet, daß 70-99,8, vorzugsweise 85-99 Gew.-% festes oder geschmolzenes Polyarylensulfid, bevorzugt Polyphenylensulfids, mit einer Schmelzviskosität von 5 bis 500 Pas mit 0,2-30, vorzugsweise 1-15 Gew.-% der Xylol-Formaldehydharze abgemischt werden und in der Schmelze bei Temperaturen von 180 bis 350°C homogenisiert werden.

3. Verwendung von Formmassen gemäß Anspruch 1, zur Herstellung geformter Körper.